# EUROPEAN PATENT SPECIFICATION

(11) **EP 4 459 268 B1**
(45) Date of publication and mention of the grant of the patent: **29.04.2026**
(21) Application number: 23763697.2
(22) Date of filing: 02.03.2023
(51) Int. Cl.: G06T 7/00, H01M 10/42, H01M 10/48, G01N 21/88, G06V 20/52, G06N 3/08, G06N 3/045, G06N 3/04

(54) **BATTERY FAILURE DETECTION DEVICE, METHOD, AND SYSTEM**
VORRICHTUNG, VERFAHREN UND SYSTEM ZUR ERKENNUNG VON BATTERIEFEHLERN
DISPOSITIF, PROCÉDÉ ET SYSTÈME DE DÉTECTION DE DÉFAILLANCE DE BATTERIE

(30) Priority: 02.03.2022 KR 20220027072
(43) Date of publication of application: 06.11.2024
(73) Proprietor: LG Energy Solution, Ltd., Seoul 07335 (KR)
(72) Inventor: NOH, Tae Jin, Daejeon 34122 (KR); YI, Eun Gyu, Daejeon 34122 (KR); KIM, Jung Han, Daejeon 34122 (KR)
(74) Representative: BCKIP Part mbB
(86) International application number: PCT/KR2023/002839
(87) International publication number: WO 2023/167498

(56) References cited:
- CA-A1- 3 166 581
- KR-A- 20200 094 608
- KR-A- 20210 010 541
- KR-A- 20210 010 541
- KR-A- 20210 038 143
- KR-A- 20210 038 143
- KR-A- 20220 011 487
- US-A1- 2020 285 938

## Description

### [TECHNICAL FIELD]

### CROSS-REFERENCE TO RELATED APPLICATION

Priority is claimed to Korean Patent Application No. 10-2022-0027072 filed in the Korean Intellectual Property Office on March 2, 2022.

### TECHNICAL FIELD

The invention disclosed herein in particular relate to a battery defect detection apparatus, a battery defect detection method, and a battery defect detection system.

### [BACKGROUND ART]

Recently, as the demand for portable electronic products such as laptop computers, video cameras, and mobile phones has increased rapidly, and development of electric vehicles, batteries for energy storage, robots, satellites, etc., has hit its stride, research on high-performance batteries that are repeatedly chargeable and dischargeable is being actively conducted.

Current commercially available batteries include nickel cadmium batteries, nickel hydride batteries, nickel zinc batteries, lithium batteries, and so forth, among which the lithium batteries are in the limelight due to their advantages of free charge and discharge due to little memory effect, very low self-discharge rate, and high energy density, compared to nickel-based batteries.

KR 2021/0010541 A addresses the technical problem of inefficiency and high cost associated with existing methods for detecting defects in monocrystalline silicon solar batteries on production lines. It is proposed here to provide an automated battery defect detection method and system that utilizes a deep neural network model (specifically, a Mask RCNN-based structure) to analyze images of batteries from the production line. The method involves acquiring images of each battery and corresponding production node information, inputting these images into a pre-set defect detection model to obtain detection results (presence, type, and location of defects), and if a defect is detected, sending a control command to the relevant production node to automatically sort out the defective battery. The defect detection model is trained and retrained using historical and updated image data, allowing it to recognize both simple and complex/new defects, thus improving detection accuracy and efficiency while reducing labor costs.

KR 2021 0038 143 A also addresses the technical problem of inefficiency and high cost of defect inspection in display manufacturing processes, here particularly for glass substrates. An AI-based object inspection system and method is suggested that uses machine learning to detect defects in objects such as glass substrates. A classification unit systematically classifies defect data and normal data based on a first classification model provided by a data learning unit, and detects a new defect. When the first classification model is changed to a second classification model, the defect data and the normal data may be systematically classified based on the second classification model. In this case, an image that has been determined as a normal image in the first classification model or an image that has not been determined because it is a new defect may be determined as a defect image in the second clarification model.

### [DISCLOSURE]

### [TECHNICAL PROBLEM]

In battery manufacturing and assembling processes, due to deformation, crushing, or damage, etc., of a sealing part of a battery casing, an appearance defect of a battery pouch (e.g., pressed edges, dents, scratches, wrinkles, electrolyte contamination, etc.) may occur. As the appearance defect of the pouch may affect the reliability and/or safety of a battery, it is important to detect a defect of the battery (e.g., the pouch) before distribution of the battery.

To detect the appearance defect of the battery (e.g., the pouch), a generally-used appearance inspector collects and learns each image of a good product type and a defective product type and inspects whether there is an appearance defect for a battery having undergone manufacturing and assembly processes. However, when a defect of a new type rather than an existing learned type occurs, a battery may be determined as a good product. In addition, in pouch manufacturing and assembly processes, a rate of a defect of a new type is low, making it difficult to collect a defective product image suitable for learning of the appearance inspector.

Accordingly, the object of the present invention is to provide a battery defect detection apparatus, a battery defect detection method, and a battery defect detection system to prevent defect leakage by supplementing detection uncertainty of a new defect type. Other objects and advantages of the present disclosure may be understood by the following description, and will be more clearly understood by embodiments of the present disclosure. In addition, it would be easily understood that the object and advantages of the disclosure may be implemented by means provided in the claims and a combination thereof. In particular, the above object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

### [TECHNICAL SOLUTION]

A battery defect detection apparatus according to the invention includes a communication module, a processor, and a memory configured to store a first artificial intelligence model, a second artificial intelligence model, and instructions, wherein the instructions cause, when executed by the processor, the battery defect detection apparatus, to obtain an image of a subject product by using the communication module, input the image of the subject product to the first artificial intelligence model to classify the subject product, and input the image of the subject product to the second artificial intelligence model to determine whether the image of the subject product corresponds to first data for classifying the subject product as normal among learning data of the first artificial intelligence model, when the subject product is classified as normal, wherein the learning data includes at least one of each of data for classifying the subject product as normal and data for classifying the subject product as defective.

According to an embodiment, the instructions may cause, when executed by the processor, the battery defect detection apparatus, to re-classify the subject product as defective when the image does not correspond to the first data.

According to an embodiment, the instructions may cause, when executed by the processor, the battery defect detection apparatus, to determine the image as second data for classifying the subject product as defective, when the image does not correspond to the first data.

According to an embodiment, the instructions may cause, when executed by the processor, the battery defect detection apparatus, to train the first artificial intelligence model based on the second data.

According to a not claimed embodiment, the image of the subject product may be obtained by an image obtaining device through multiple channels.

According to the invention, the instructions may cause, when executed by the processor, the battery defect detection apparatus, to obtain a similarity between the image and the first data through the second artificial intelligence model and re-classify the subject product as defective or normal based on the similarity.

According to an embodiment, the instructions may cause, when executed by the processor, the battery defect detection apparatus, to determine the image as second data for classifying the subject product as defective, when the similarity of the image is less than a preset reference value.

According to an embodiment, the instructions may cause, when executed by the processor, the battery defect detection apparatus, to train the first artificial intelligence model based on the second data.

A battery defect detection method according to the invention includes obtaining an image of a subject product, inputting the image of the subject product to the first artificial intelligence model to classify the subject product, and inputting the image of the subject product to the second artificial intelligence model to determine whether the image of the subject product corresponds to first data for classifying the subject product as normal among learning data of the first artificial intelligence model, when the subject product is classified as normal, wherein the learning data includes at least one of each of data for classifying the subject product as normal and data for classifying the subject product as defective.

According to an embodiment, the battery defect detection method may further include re-classifying the subject product as defective when the image does not correspond to the first data.

According to an embodiment, the battery defect detection method may further include determining the image as second data for classifying the subject product as defective, when the image does not correspond to the first data.

According to an embodiment, the battery defect detection method may further include training the first artificial intelligence model based on the second data.

According to a not claimed embodiment, the image of the subject product may be obtained by an image obtaining device through multiple channels.

According to invention, the battery defect detection method may further include obtaining a similarity between the image and the first data through the second artificial intelligence model and re-classifying the subject product as defective or normal based on the similarity.

According to an embodiment, the battery defect detection method may further include determining the image as second data for classifying the subject product as defective, when the similarity of the image is less than a preset reference value.

According to an embodiment, the battery defect detection method may further include training the first artificial intelligence model based on the second data.

A battery defect detection system according to the invention as claimed includes a battery defect detection apparatus configured to obtain an image of a subject product and classify the subject product by using a first artificial intelligence model trained using the image of the subject product and previously stored learning data and a new defect detection device configured to input the image of the subject product to a second artificial intelligence model to determine whether the image of the subject product corresponds to first data for classifying the subject product as normal among the learning data of the first artificial intelligence model, when the subject product is classified as normal, wherein the learning data includes at least one of each of data for classifying the subject product as normal and data for classifying the subject product as defective.

### [ADVANTAGEOUS EFFECTS]

A battery defect detection apparatus according to the disclosure may detect a defective product of a new type not included in previously stored learning data, thereby preventing leakage of defective products.

The battery defect detection apparatus according to the disclosure may learn an image of a defective product of a new type, thereby improving a precision of defect detection.

A battery defect detection system according to the disclosure may use a new defect detection apparatus in addition to an existing defect detection apparatus together, thereby improving convenience in introduction of the new defect defection apparatus.

The effects of the battery defect detection apparatus, method, and system according to the disclosure of the present document are not limited to the effects mentioned above, and other effects not mentioned will be clearly understood by those of ordinary skill in the art according to the disclosure of the present document.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### [Description of Drawings]

FIG. 1 is a view showing a battery defect detection apparatus according to an embodiment disclosed herein.
FIG. 2 illustrates an artificial intelligence model according to an embodiment disclosed herein.
FIG. 3A is a view showing first data for classifying a subject product as normal among learning data according to an embodiment disclosed herein.
FIG. 3B is a view showing second data for classifying a subject product as defective among learning data according to an embodiment disclosed herein.
FIG. 4 illustrates an artificial intelligence model according to an embodiment disclosed herein.
FIG. 5 illustrates an artificial intelligence model and a process of detecting a good product and/or a defective product among subject products by using the artificial intelligence model, according to an embodiment disclosed herein.
FIG. 6 is a view showing images classified as normal by an artificial intelligence model.
FIG. 7 is a view showing a battery defect detection method according to an embodiment disclosed herein.
FIG. 8 is a view showing a battery defect detection method according to an embodiment disclosed herein.
FIG. 9 is a view showing a battery defect detection method according to an embodiment disclosed herein.
FIG. 10 is a view showing a battery defect detection method according to an embodiment disclosed herein.
FIG. 11 is a view showing a battery defect detection system according to an embodiment disclosed herein.

With regard to the description of the drawings, similar reference numerals may be used to refer to similar or related components.

### [Mode for Invention]

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to a not claimed embodiment, a method described below may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include, although not claimed, a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

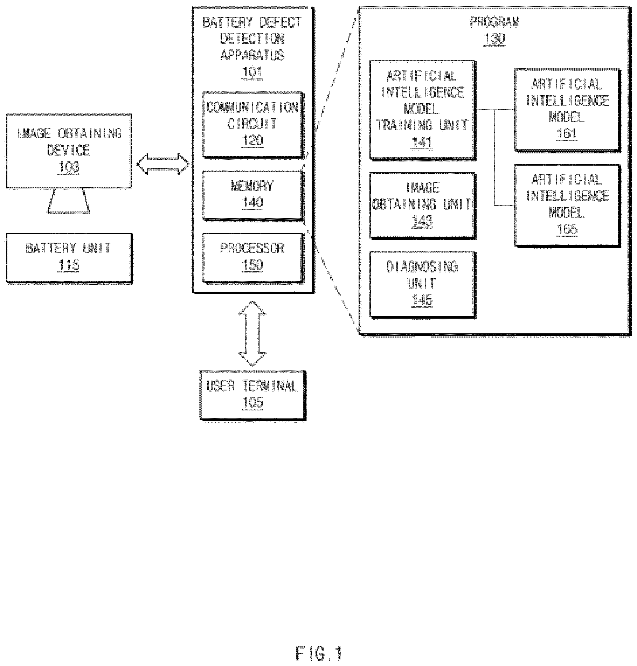

FIG. 1 is a view showing a battery defect detection apparatus according to an embodiment disclosed herein.

Referring to FIG. 1, a battery defect detection apparatus 101 according to an embodiment disclosed herein may be wiredly and/or wirelessly connected to an image obtaining device 103 and a user terminal 105.

In an embodiment, connection between the battery defect detection apparatus 101 and the image obtaining device 103 may be communication connection through a wired and/or wireless network. In an embodiment, the wired network may be based on a local area network (LAN) communication or a power-line communication. In an embodiment, the wireless network may be based on a short-range communication network (e.g., Bluetooth, Wireless Fidelity (WiFi), or Infrared Data Association (IrDA)) or a remote-range communication network (e.g., a cellular network, a 4^{th}-Generation (4G) network, a 5^{th}-Generation (5G) network).

In another embodiment, the connection between the battery abnormality diagnosis apparatus 101 and the image obtaining device 103 may be connection using a device-to-device communication scheme (e.g., a bus, a general-purpose input and output (GPIO), a serial peripheral interface (SPI), or a mobile industry processor interface (MIPI)).

In an embodiment, the connection between the battery abnormality diagnosis apparatus 101 and the user terminal 105 may be communication connection through a wired and/or wireless network.

According to the invention, the image obtaining device 103 obtains an image of a subject product (e.g., a battery unit 115). According to an embodiment, the subject product (e.g., the battery unit 115) may include a secondary battery. According to an embodiment, the secondary battery may include a pouch-type secondary battery, a prismatic secondary battery, and/or a cylindrical secondary battery.

The image obtaining device 103 may obtain an image of the subject product by photographing the subject product. According to an embodiment, the image obtaining device 103 may be implemented as a camera. According to an embodiment, the image obtaining device 103 may obtain the image of the subject product through multiple channels.

In an embodiment, the user terminal 105 may be a mobile device (e.g., a mobile phone, a laptop computer, a smart phone, a smart pad), or a personal computer (PC). In an embodiment, the user terminal 105 may be a terminal used by a manager of the battery defect detection apparatus 101.

According to the invention, the battery defect detection apparatus 101 includes a communication circuit 120, a memory 140, and a processor 150. According to an embodiment, the battery defect detection apparatus 101 shown in FIG. 1 may further include at least one component (e.g., a display, an input device, or an output device) in addition to components shown in FIG. 1.

According to an embodiment, the communication circuit 120 may establish a wired communication channel and/or a wireless communication channel between the battery defect detection apparatus 101 and the image obtaining device 103 and/or the user terminal 105, and transmit and receive data to and from the image obtaining device 103 and/or the user terminal 105 through the established communication channel.

In an embodiment, the memory 140 may include a volatile and/or a nonvolatile memory.

In an embodiment, the memory 140 may store data used by at least one component (e.g., the processor 150) of the battery defect detection apparatus 101. For example, the data may include a program 130 (or an instruction related thereto), input data, or output data. In an embodiment, the instruction, when executed by the processor 150, may cause the battery defect detection apparatus 101 to perform operations defined by the instruction.

In an embodiment, the program 130 may include one or more software (e.g., an artificial intelligence model training unit 141, an image obtaining unit 143, a diagnosing unit 145, and one or more artificial intelligence models 161 and 165).

In an embodiment, the processor 150 may include a central processing unit, an application processor, a graphic processing unit, a neural processing unit (NPU), an image signal processor, a sensor hub processor, or a communication processor.

In an embodiment, the processor 150 may execute software (e.g., the artificial intelligence model training unit 141, the image obtaining unit 143, the diagnosing unit 145, an abnormality processing unit 147, a pre-processing unit 149, and the one or more artificial intelligence models 161 and 165) to control at least one other component (e.g., a hardware or software component) of the battery defect detection apparatus 101 connected to the processor 150 and perform various data processing or operations.

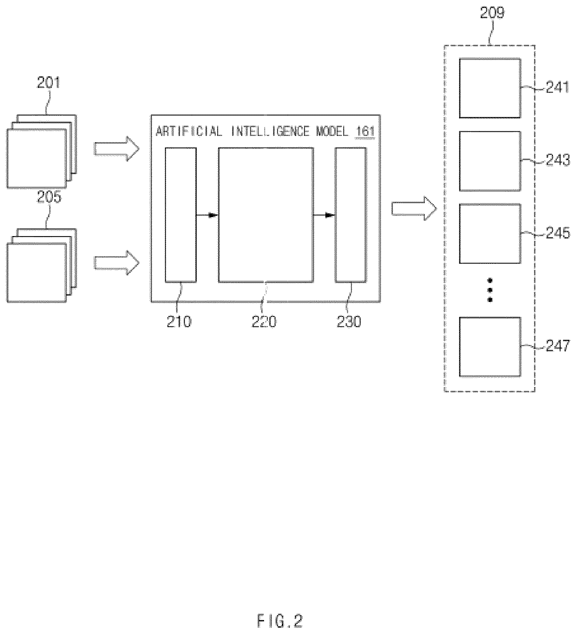

Hereinbelow, with reference to FIGS. 2 to 5, a description will be made of a method for the battery defect detection apparatus 101 to diagnose abnormality of a subject product (e.g., the battery unit 115) through the artificial intelligence model training unit 141, the image obtaining unit 143, the diagnosing unit 145, and the one or more artificial intelligence models 161 and 165.

### First Artificial Intelligence Model Training

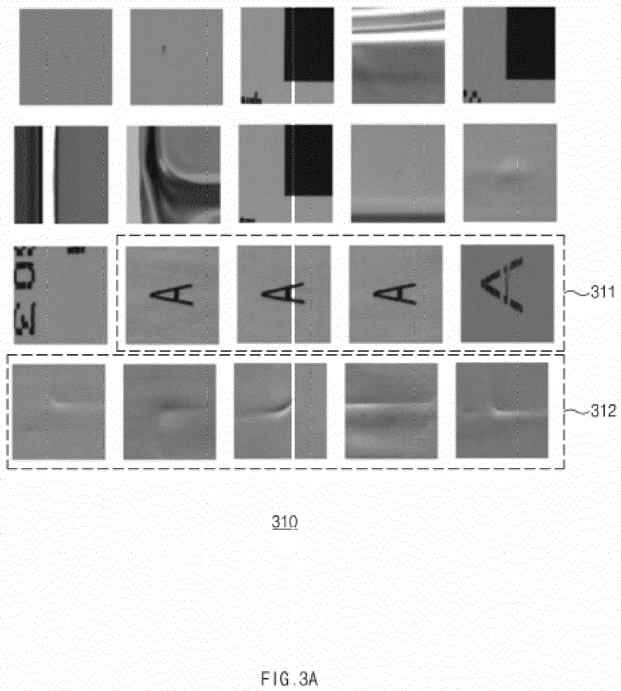

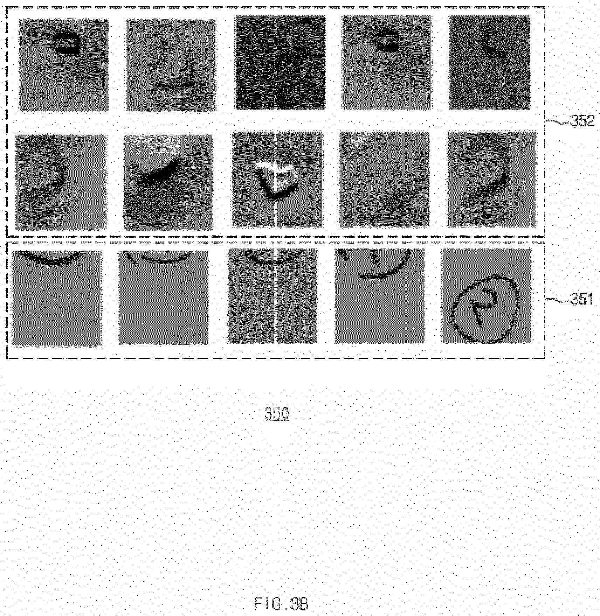

FIG. 2 illustrates the artificial intelligence model 161 according to the invention. FIG. 3A is a view showing first data for classifying a subject product as normal among learning data according to an embodiment disclosed herein. FIG. 3B is a view showing second data for classifying a subject product as defective among learning data according to an embodiment disclosed herein.

In an embodiment, the artificial intelligence model training unit 141 may train the artificial intelligence model 161 based on previously obtained images 201 and images 205 for a subject product. Herein, the images 201 and the images 205 may be previously obtained learning data. The images 201 may mean first data for classifying a subject product as normal among the learning data. The images 205 may mean second data for classifying a subject product as defective among the learning data. In an embodiment, the images 201 and the images 205 may include the entire image of the subject product or an image of each part of the subject product. In an embodiment, the images 201 and the images 205 include the entire images, the images 201 may include an image of a subject product classified as a normal product and the images 205 may include an image of a subject product classified as a defective product. In an embodiment, when the images 201 and the images 205 include partial images, the images 201 may include images classified as normal among images resulting from dividing the entire image of the subject product for each inspection item (e.g., dents, pressing, printed texts, welding), and the images 205 may include images classified as defective among images resulting from dividing the entire image of the subject product for inspection item.

For example, referring to FIG. 3A, first data 310 may include images classified as normal among the divided images respectively for the inspection items. For example, images 311 may include images having normal printed texts, and images 312 may include images with a dented level within a normal range. Likewise, referring to FIG. 3B, second data 350 may include images classified as defective among the divided images respectively for the inspection items. For example, images 351 may include images having abnormal printed texts, and images 352 may include images with a dented or pressing level out of the normal range.

In an embodiment, the artificial intelligence model 161 may be subject to multinomial classification (e.g., a convolutional neural network (CNN)-based model). In an embodiment, the artificial intelligence model 161 may be trained to classify the subject product as normal or defective based on the images 201 and 205 for the subject product. In an embodiment, the artificial intelligence model 161 may be trained to classify the subject product as normal or defective for each of the inspection items, based on the images 201 and 205 for the subject product.

In an embodiment, the artificial intelligence model 161 may include an input layer 210, a hidden layer 220, and an output layer 230. Herein, the previously obtained images 201 and images 205 for the subject product may be input to the input layer 210. The hidden layer 220 may have a structure where multiple layers are sequentially connected. The output layer 230 may be a layer for outputting a multinomial classification result 209 of each of the images 201 and the images 205. In an embodiment, in the multinomial classification result 209, the images 201 and the images 205 may include probability values for classes 241, 243, 245, and 247 according to the inspection items. For example, the class 241 may indicate a probability of a printed text being normal, and the class 243 may indicate a probability of a printed text being defective. In another example, the class 245 may indicate a probability of a dented or pressed level being within a normal range, and the class 247 may indicate a probability of the dented or pressed level being out of the normal range. A sum of the probability values for the classes 241, 243, 245, and 247 may be 1.

In the invention, the artificial intelligence model training unit 141 inputs the images 201 and the images 205 to the artificial intelligence model 161 to adjust parameters of the hidden layer 220 such that the obtained multinomial classification result 209 and a prior classification result of each of the images 201 and the images 205 are the same as each other or are different from each other by a reference difference value or less.

### Second Artificial Intelligence Model Training

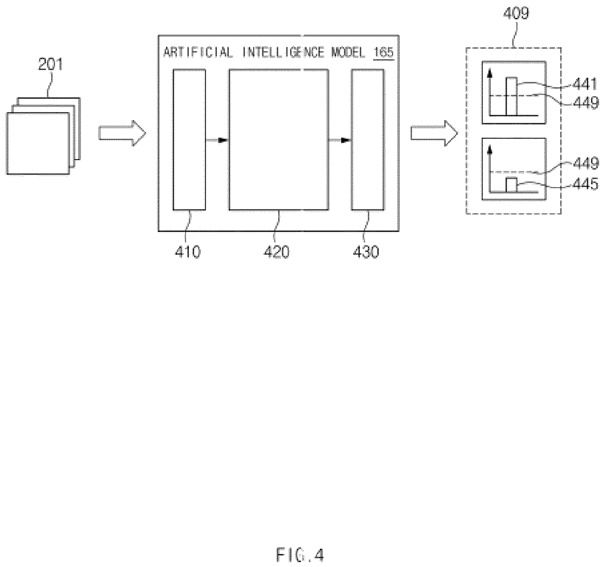

FIG. 4 illustrates the artificial intelligence model 165 according to the invention.

In an embodiment, the artificial intelligence model training unit 141 may train the artificial intelligence model 165 based on the previously obtained images 201 for the subject product. Herein, images used for learning the artificial intelligence model 165 may be first data for classifying a subject product as normal among learning data.

In an embodiment, the artificial intelligence model 165 may be a model capable of multinomial classification (e.g., a CNN-based model). In an embodiment, the artificial intelligence model 165 may be trained to output a similarity between normal images for each inspection items, based on the first data (i.e., the images 201) for the subject product. Herein, the similarity may mean a maximum value of a probability value according to a multinomial classification result obtained by the artificial intelligence model 165.

In an embodiment, the artificial intelligence model 165 may be trained to identify whether an image is in-distribution (i.e., corresponds to a previously trained image of a good product) or out-of-distribution (i.e., corresponds to an image of a defective product of a new type) by comparing a similarity based on the first data (i.e., the images 201) for the subject product with a reference value.

In an embodiment, the artificial intelligence model 165 may include an input layer 410, a hidden layer 420, and an output layer 430. Herein, the previously obtained images 201 for the subject product may be input to the input layer 410. The hidden layer 420 may have a structure where multiple layers are sequentially connected. The output layer 430 may be a layer for outputting a multinomial classification result 409 of each of the images 201. In an embodiment, in the multinomial classification result 409, the images 201 may include probability values for classes according to the inspection items. The number of classes set in the artificial intelligence model 165 may be less than the number of classes set in the artificial intelligence model 161. For example, only classes indicating normal may be in the artificial intelligence model 165. For example, the intelligence artificial model 165 may indicate a probability of a printed text being normal or include a class indicating the probability of the printed text being normal. A sum of probability values for classes of the artificial intelligence model 165 may be 1.

In an embodiment, the artificial intelligence model training unit 141 may input the images 201 to the artificial intelligence model 165 to adjust parameters of the hidden layer 420 such that a maximum value 441 of a probability value according to the multinomial classification result 409 exceeds a reference value 449.

In an embodiment, the artificial intelligence model training unit 141 may test the artificial intelligence model 165 by using the images 205. For example, the artificial intelligence model training unit 141 may determine whether the maximum value 445 of the probability value according to the multinomial classification result 409 of the images 205 is less than or equal to the reference value 449. In an embodiment, when the maximum value 445 of the probability value according to the multinominal classification result 409 of the images 205 exceeds the reference value 449, the artificial intelligence model training unit 141 may adjust the reference value 449 of the artificial intelligence model 165. For example, the artificial intelligence model training unit 141 may adjust the reference value 449 based on a baseline algorithm or an out-of-distribution detector for neural networks (ODIN) algorithm. Herein, adjustment of the reference value 449 may be distinguished from a training process for adjusting the parameters of the hidden layer 420.

### Detection of Defect of Subject Product

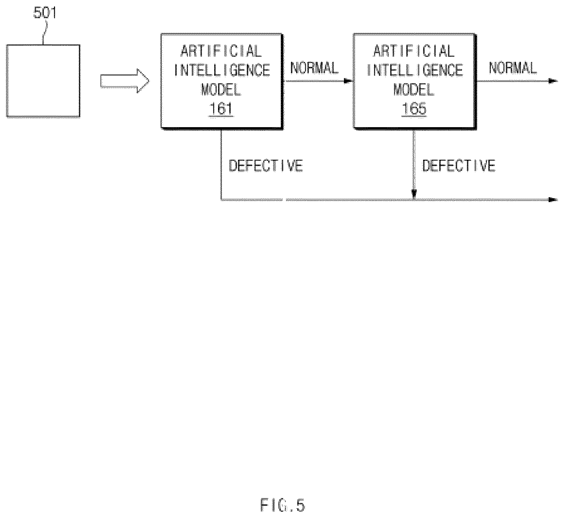

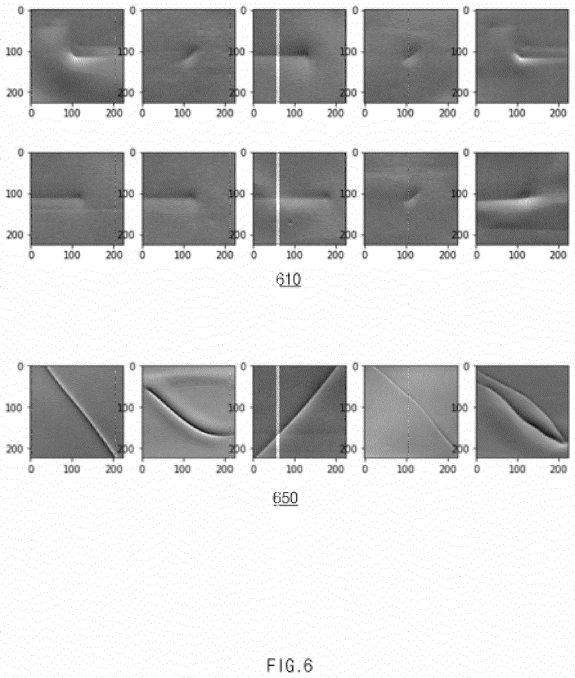

FIG. 5 illustrates the artificial intelligence model 161 and a process of detecting a good product and/or a defective product among subject products by using the artificial intelligence model 165, according to an embodiment disclosed herein. FIG. 6 is a view showing images classified as normal by an artificial intelligence model.

In an embodiment, the processor 120 may detect a good product and/or a defective product among subject products, through the diagnosing unit 145. The processor 120 may classify a subject product as normal or defective to detect the good product and/or the defective product, through the diagnosing unit 145. The processor 120 may classify the subject product as normal or defective based on previously stored learning data, through the diagnosing unit 145. Hereinbelow, it may be understood that operations of the processor 120 are performed through the diagnosing unit 145, unless specially mentioned.

In an embodiment, the processor 120 may classify a subject product by using an image 501 of the subject product and previously stored learning data. The processor 120 may compare the image 501 of the subject product obtained by the image obtaining device 103 with the previously stored learning data. Herein, the processor 120 may obtain the image 501 of the subject product obtained in the image obtaining device 103, through the image obtaining unit 143. In an embodiment, the image obtaining unit 143 may include a network driver for controlling the communication circuit 120. According to an embodiment, the processor 120 may compare the image 501 of the subject product with the previously stored learning data to classify the subject product. According to an embodiment, the processor 120 may classify the subject product based on the artificial intelligence model 161 to which the previously stored learning data is applied.

According to the invention, the learning data includes at least one of each of data for classifying the subject product as normal and data for classifying the subject product as defective. The first data may mean data for classifying the subject product as normal among the learning data. According to an embodiment, the first data may include an image of a good product. According to an embodiment, the processor 120 may learn a criterion for classifying the subject product as normal by using the first data.

The processor 120 classifies the subject product as normal or defective based on the previously stored learning data. The target subject product may mean a subject product classified as normal when the processor 120 classifies the subject product based on the previously stored learning data. According to an embodiment, the processor 120 may be likely to classify a defective product of a new type not trained by the previously learning data as normal. In this case, the target subject product may include not only a good product, but also a defective product of a new type. For example, images 610 may include images of normal subject products of an existing type, and images 650 may include images of defective subject products of a new type. In this case, when the images 610 are input to the artificial intelligence model 161, a subject product for the images 610 may be classified as normal (i.e., a good product). In another example, when the images 650 of defective products of a new type are input to the artificial intelligence model 161, a subject product for the images 650 may be classified as normal (i.e., a good product).

The processor 120 may obtain a target image (i.e., the images 610 and 650) corresponding to a target subject product. The processor 120 may determine characteristics of the target image by using the first data and the target image. The processor 120 may detect a defective product of a new type by using the characteristics of the target image. According to an embodiment, the processor 120 may re-classify the target subject product as normal or defective, by using the characteristics of the target image. According to an embodiment, the processor 120 may classify the subject product based on the artificial intelligence model 165 to which the first data is applied among the previously stored learning data. In an embodiment, the processor 120 may compare a similarity obtained by inputting each target image (i.e., the images 610 and 650) to the artificial intelligence model 165 with a reference value to detect a defective product of a new type. Herein, the similarity may mean a maximum value of a probability value according to a multinomial classification result obtained by the artificial intelligence model 165. For example, for the images 610 with a similarity exceeding a reference value among the images 610 and 650, the processor 120 may determine corresponding subject products as normal. In another example, for the images 650 with a similarity less than the reference value among the images 610 and 650, the processor 120 may determine corresponding subject products as defective.

The subject product re-classified as defective among the target subject products may correspond to the defective product of a new type. The processor 120 may detect the defective product of the new type by applying a re-classification process to the target subject products.

According to an embodiment, the processor 120 may compare whether the target image corresponds to the first data. When the target image does not correspond to the first data, the processor 120 may re-classify the target subject product as defective.

According to an embodiment, the processor 120 may determine a similarity between the target image and the first data. The processor 120 may determine the similarity between the target image and the first data according to a preset method. The processor 120 may re-classify the target subject product as defective or normal based on the similarity between the target image and the first data. According to an embodiment, the processor 120 may re-classify the target subject product as defective when the similarity is less than the preset reference value, and the target subject product as normal when the similarity is greater than or equal to the reference value. According to the invention, the processor 120 determines a similarity between the target image and the first data and re-classifies the target subject product as defective or normal based on the similarity. According to another embodiment disclosed herein, the processor 120 may determine a dissimilarity between the target image and the first data and re-classify the target subject product as defective or normal based on the dissimilarity.

The processor 120 determines the target image as the second data when the target subject product is re-classified as defective. The second data may correspond to an image for classifying the subject product as defective. The second data may include an image of a defective product of a new type not included in the previously stored learning data. According to an embodiment, the processor 120 may include the second data in the learning data. The processor 120 may learn a defect of a new type by including the second data in the learning data. The processor 120 may train the artificial intelligence model 161 based on the image (e.g., the images 650) newly included in the second data.

According to an embodiment, the processor 120 may determine a target image as the second data when the target image does not correspond to the first data. According to another embodiment, the processor 120 may determine a target image as the second data when a similarity of the target image does is less than a preset reference value.

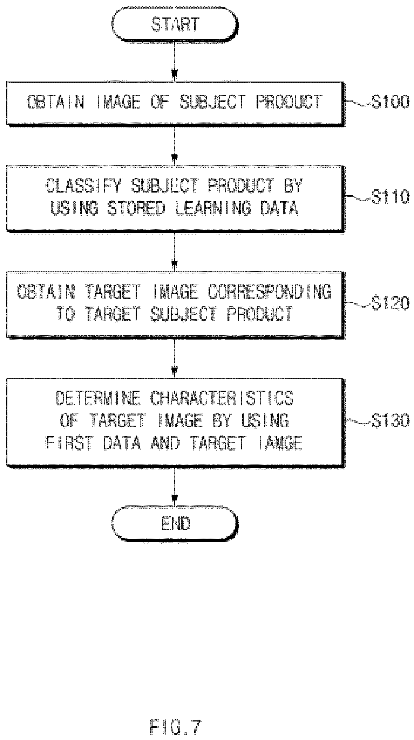

FIG. 7 is a view showing a battery defect detection method according to an embodiment disclosed herein.

Referring to FIG. 7, a battery defect detection method according to the invention includes operation S100 of obtaining an image of a subject product, operation S110 of classifying the subject product by using stored learning data, operation S120 of obtaining a target image corresponding to a target subject product, and may include operation S130 of determining characteristics of the target image by using first data and the target image.

Hereinbelow, the battery defect detection method will be described in detail with reference to FIG. 1, and matters redundant to the above-described matters will be omitted or described in brief for convenience of description.

In operation S100, according to the invention, the battery defect detection apparatus 101 obtains an image of a subject product. According to an embodiment, the subject product may include a secondary battery. According to an embodiment, in operation S100, the battery defect detection apparatus 101 may obtain the image of the subject product through multiple channels. Operation S100 may be performed by the image obtaining unit 143 of the battery defect detection apparatus 101.

In operation S110, according to the invention, the battery defect detection apparatus 101 classifies the subject product by using stored learning data. According to an embodiment, the battery defect detection apparatus 101 may compare the image of the subject product with previously stored learning data and classify the subject product according to a comparison result. According to an embodiment, the battery defect detection apparatus 101 may classify the subject product based on the artificial intelligence model 161 to which the previously stored learning data is applied. Operation S110 may be performed by the processor 120 of the battery defect detection apparatus 101.

According to an embodiment, the learning data may include at least one data for classifying the subject product as normal or defective. The first data may mean data for classifying the subject product as normal among the learning data. According to an embodiment, the first data may include an image of a good product. According to an embodiment, the battery defect detection apparatus 101 may learn a criterion for classifying the subject product as normal by using the first data.

In operation S110, the battery defect detection apparatus 101 may classify the subject product as normal or defective based on the learning data. The subject product classified as normal in operation S710 may be referred to as a target subject product. According to an embodiment, the battery defect detection apparatus 101 may classify the subject product as normal or defective based on the learning data and may be likely to classify a defective product of a new type not learned by the learning data as normal. In this case, the target subject product may include not only a good product, but also a defective product of a new type.

In operation S120, the battery defect detection apparatus 101 may obtain a target image corresponding to the target subject product. According to an embodiment, the battery defect detection apparatus 101 may identify the target image corresponding to the target subject product among previously obtained images of the subject product. Operation S120 may be performed by the processor 120 of the battery defect detection apparatus 101.

In operation S130, the battery defect detection apparatus 101 may determine characteristics of the target image by using the first data and the target image. The first data may mean data for classifying the subject product as normal among the learning data. According to an embodiment, the first data may include an image of a good product. According to the invention, the battery defect detection apparatus 101 determines characteristics of the target image by using the first data and the target image based on the artificial intelligence model 165 to which the first data is applied. Operation S130 is performed by the processor 120 of the battery defect detection apparatus 101.

In operation S130, the battery defect detection apparatus 101 may determine the characteristics of the target image. According to an embodiment, the battery defect detection apparatus 101 may determine whether the target image corresponds to the first data. According to the invention, the battery defect detection apparatus 101 determines a similarity between the target image and the first data.

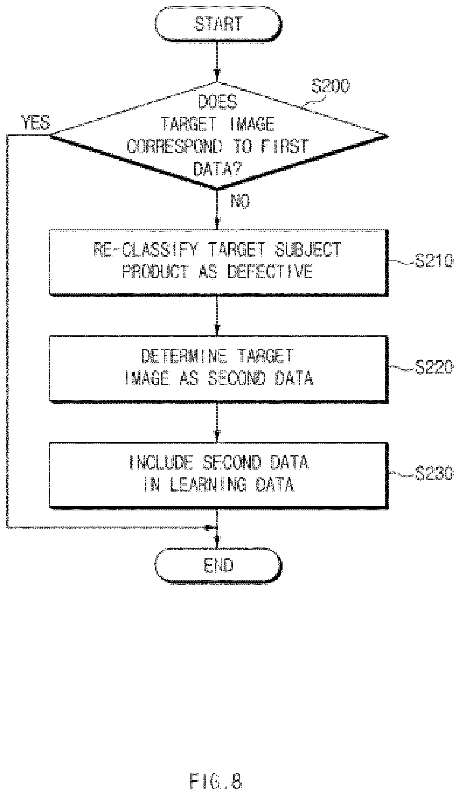

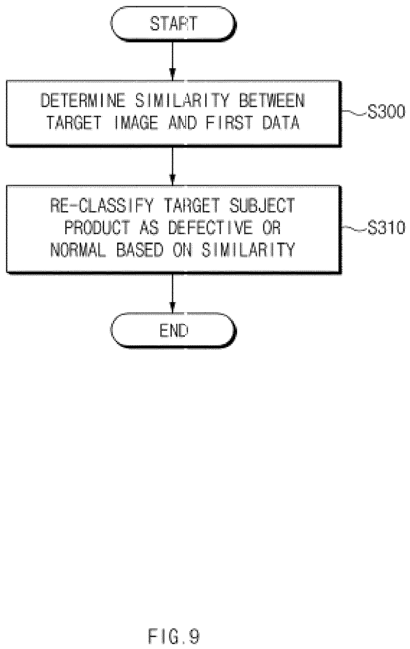

Accordding to the invention, the battery defect detection apparatus 101 re-classifies the target subject product as normal or defective based on the characteristics of the target image determined in operation S130. A detailed method of re-classifying the target subject product as normal or defective based on the characteristics of the target image determined by the battery defect detection apparatus 101 will be described later with reference to FIGS. 8 and 9.

FIG. 8 is a view showing a battery defect detection method according to an embodiment disclosed herein.

Referring to FIG. 8, a battery defect detection method according to the invention further includes operation S200 of determining whether a target image corresponds to first data, and operation S210 of re-classifying a target subject product as defective when the target image does not correspond to the first data, and may include operation S220 of determining the target image as second data, and/or operation S230 of including second data in learning data.

Hereinbelow, the battery defect detection method will be described in detail with reference to FIGS. 1 and 7, and matters redundant to the above-described matters will be omitted or described in brief for convenience of description.

In operation S200, the battery defect detection apparatus 101 determines whether the target image corresponds to the first data. Operation S200 may substantially correspond to a detailed example of operation S130 of FIG. 7.

When determining that the target image does not correspond to the first data in operation S200, the battery defect detection apparatus 101 re-classifies the target subject product as defective in operation S210. According to an embodiment, the target subject product is a subject product classified as normal by the battery defect detection apparatus 101 based on the learning data, but the target subject product may also include a defective product of a new type not included in the learning data. By determining whether the target subject product corresponds to the first data in operation S200, the battery defect detection apparatus 101 may detect a defective product of a new type included in the target subject product. Operation S200 may be performed by the processor 120 of the battery defect detection apparatus 101.

When determining that the target image corresponds to the first data in operation S200, the battery defect detection apparatus 101 may re-classify the target subject product as normal.

When determining that the target image does not correspond to the first data in operation S200, the battery defect detection apparatus 101 may re-classify the target subject product as defective in operation S210.

The target subject product re-classified as defective by the battery defect detection apparatus 101 in operation S210 may correspond to a defective product of a new type not included in the learning data. Operation S210 may be performed by the processor 120 of the battery defect detection apparatus 101.

In operation S220, the battery defect detection apparatus 101 may determine the target image of the target subject product re-classified as defective in operation S210 as second data. According to an embodiment, the second data may include an image of the defective product of the new type in the battery defect detection apparatus 101. Operation S220 may be performed by the processor 120 of the battery defect detection apparatus 101.

In operation S230, the battery defect detection apparatus 101 may include the second data in the learning data. According to an embodiment, the second data may include an image used for the battery defect detection apparatus 101 to classify the subject product as defective. According to an embodiment, the second data may include an image of a defective product of a new type not included in the previously stored learning data. In operation S230, the battery defect detection apparatus 101 may learn a defect of a new type by including the second data in the learning data. Operation S230 may be performed by the processor 120 of the battery defect detection apparatus 101.

FIG. 9 is a view showing a battery defect detection method according to an embodiment disclosed herein.

Referring to FIG. 9, a battery defect detection method according to the invention further includes operation S300 of determining a similarity between a target image and first data and includes operation S310 of re-classifying a target subject product as defective or normal based on the similarity.

Hereinbelow, the battery defect detection method will be described in detail with reference to FIGS. 1, 7, and 8 and matters redundant to the above-described matters will be omitted or described in brief for convenience of description.

In operation S300, according to the invention, the battery defect detection apparatus 101 determines the similarity between the target image and the first data. Operation S300 may substantially correspond to a detailed example of operation S130 of FIG. 7. Operation S300 may be performed by the processor 120 of the battery defect detection apparatus 101.

In operation S300, the battery defect detection apparatus 101 may determine the similarity between the target image and the first data, according to a preset method. According to the invention, the battery defect detection apparatus 101 may quantify and determines the similarity between the target image and the first data. According to the invention, the battery defect detection apparatus 101 determines the similarity between the target image and the first data, but, without being limited thereto, may also determine a dissimilarity between the target image and the first data.

In operation S310, according to the invention, the battery defect detection apparatus 101 re-classifies the target subject product as defective or normal based on the similarity between the target image and the first data. The battery defect detection apparatus 101 may re-classify the target subject product as defective or normal based on the similarity between the target image and the first data. According to an embodiment, the battery defect detection apparatus 101 may set a reference value for the similarity between the target image and the first data. According to an embodiment, the battery defect detection apparatus 101 may re-classify the target subject product as defective or normal by comparing the similarity determined in operation S300 with the reference value.

According to an embodiment, the battery defect detection apparatus 101 may re-classify the target subject product corresponding to the target image as normal when the similarity between the target image and the first data is greater than or equal to the preset reference value.

According to an embodiment, the battery defect detection apparatus 101 may re-classify the target subject product corresponding to the target image as defective when the similarity between the target image and the first data is less than the preset reference value. The target subject product re-classified as defective may correspond to the defective product of a new type.

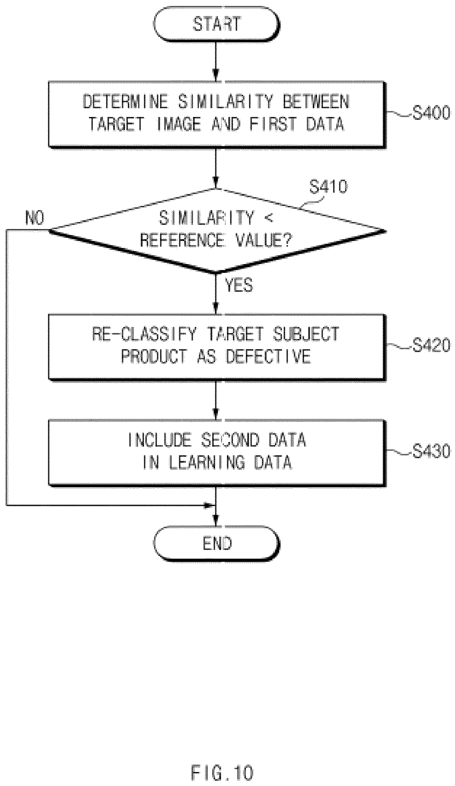

FIG. 10 is a view showing a battery defect detection method according to an embodiment disclosed herein.

Referring to FIG. 10, a battery defect detection method according to the invention further includes operation S400 of determining the similarity between the target image and the first data, and may include operation S410 of comparing the similarity between the target image and the first data with the preset reference value, operation S420 of determining the target image as the second data when the similarity between the target image and the first data is less than the reference value, and/or operation S430 of including the second data in the learning data.

Hereinbelow, the battery defect detection method will be described in detail with reference to FIGS. 1, 7, and 9 and matters redundant to the above-described matters will be omitted or described in brief for convenience of description.

Operation S400 may be substantially the same as operation S300 of FIG. 4. Operations S410, S420, and/or S430 may be performed simultaneously with or before or after operations S310 of FIG. 4.

In operation S410, the battery defect detection apparatus 101 may determine whether a similarity between the target subject product and the first data is less than a preset reference value. The reference value may correspond to a value set as a reference for the battery defect detection apparatus 101 to re-classify the target subject product as normal or defective based on the similarity between the target image and the first data.

The target image determined to have a similarity greater than or equal to the reference value by the battery defect detection apparatus 101 in operation S410 may include an image of a good product. According to an embodiment, the battery defect detection apparatus 101 may not perform an additional operation on the target image determined to have the similarity greater than or equal to the reference value. According to another embodiment, the battery defect detection apparatus 101 may include the target image determined to have the similarity greater than or equal to the reference value, in the first data. According to an embodiment disclosed herein, the battery defect detection apparatus 101 may include the target image determined to have the similarity greater than or equal to the reference value, in the first data and learn the target image, thereby improving the precision of defect detection.

In operation S420, the battery defect detection apparatus 101 may determine the target image determined to have the similarity less than the reference value as the second data. According to an embodiment, the target image determined as the second data may include an image of a defective product of a new type. According to an embodiment, in operation S420, the battery defect detection apparatus 101 may determine the target image corresponding to the defective product of the new type as the second data.

In operation S430, the battery defect detection apparatus 101 may include the second data in the learning data. According to an embodiment, the second data may include an image used for the battery defect detection apparatus 101 to classify the subject product as defective. According to an embodiment, the second data may include an image of a defective product of a new type not included in the previously stored learning data. In operation S430, the battery defect detection apparatus 101 may learn a defect of a new type by including the second data in the learning data.

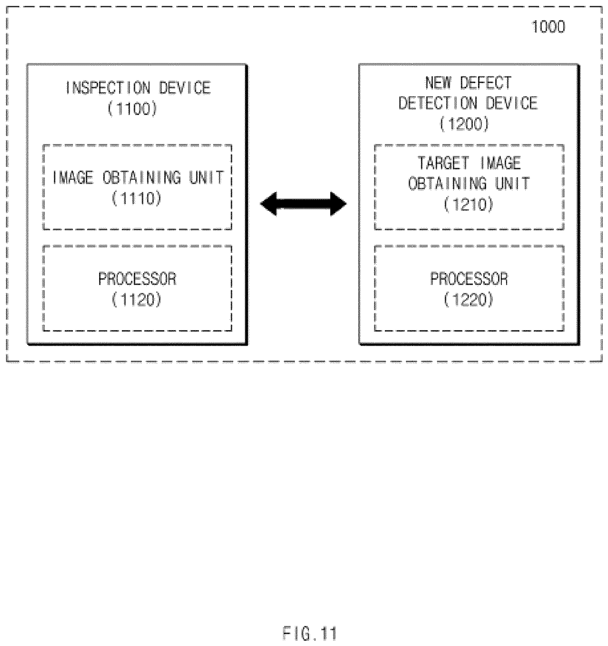

FIG. 11 is a view showing a battery defect detection system according to an embodiment disclosed herein.

Referring to FIG. 11, a battery defect detection system 1000 according to the invention includes a battery defect detection apparatus and may include an inspection device 1100 and, according to the invention, includes a new defect detection device 1200. Herein, the inspection device 1000 may be based on the artificial intelligence model 161, and the new defect detection device 1100 may be based on the artificial intelligence model 165.

Hereinbelow, the battery defect detection system will be described in detail with reference to FIGS. 1, 7, and 10 and matters redundant to the above-described matters will be omitted or described in brief for convenience of description.

The inspection device 1100 may obtain an image of a subject product and classify the subject product by using the image of the subject product and previously stored learning data. According to an embodiment, the inspection device 1100 may include an image obtaining unit 1110 and a processor 1120.

The inspection device 1100 may obtain the image of the subject product. According to an embodiment, the inspection device 1100 may obtain the image of the subject product through the image obtaining unit 1110. According to an embodiment, the image obtaining unit 1110 may obtain an image from a remote image obtaining device that photographs the subject product and obtains the image thereof. According to an embodiment, the remote image obtaining device may be implemented as a camera. According to an embodiment, the remote image obtaining device may obtain the image of the subject product through multiple channels.

The inspection device 1100 may classify the subject product by using the image of the subject product and previously stored learning data. According to an embodiment, the inspection device 1100 may classify the subject product through the processor 1120. According to an embodiment, the processor 1120 may compare the image of the subject product with the previously stored learning data. According to an embodiment, the processor 1120 may classify the subject product based on a deep learning model to which the previously stored learning data is applied.

The processor 1120 may classify the subject product as normal or defective based on the previously stored learning data. The processor 1120 may classify the subject product based on the previously stored learning data and set the subject product, classified as normal, as a target subject product. According to an embodiment, the processor 1120 may classify a defective product of a new type not included in the learning data as normal among subject products, in which the target subject product may include a good product and a defective product of a new type together.

The new defect detection device 1200 may obtain a target image corresponding to a target subject product classified as normal by the inspection device 1100 and determine characteristics of the target image by using first data for classifying a subject product as normal among the learning data and a target subject image. According to an embodiment, the new defect detection device 1200 may include a target image obtaining unit 1210 and a processor 1220.

The new defect detection device 1200 may receive a target subject product from the inspection device 1100. The new defect detection device 1200 obtains a target image corresponding to the target subject product. According to an embodiment, the new defect detection device 1200 may obtain the target image through the target image obtaining unit 1210.

According to the invention, the new defect detection device 1200 receives the target image corresponding to the target subject product from the inspection device 1100. The target image obtaining unit 1210 may identify the target image corresponding to the target subject product among images of the subject product previously obtained by the inspection device 1100. According to an embodiment, the target image obtaining unit 1210 may be implemented as one module by being integrated with the processor 1220.

According to another embodiment, the target image obtaining unit 1210 may capture the image of the target subject product received from the inspection device 1100 to obtain the target image. In this case, the target image obtaining unit 1210 may be implemented with a camera.

The new defect detection device 1200 may determine characteristics of the target image by using the first data and the target image. The first data may mean data for the inspection device 1100 to classify the subject product as normal among the learning data. According to an embodiment, the new defect detection device 1200 may share the learning data with the inspection device 1100. According to an embodiment, the new defect detection device 1200 may determine characteristics of the target image through the processor 1220.

According to an embodiment, the processor 1220 may determine whether the target image corresponds to the first data. According to the invention, the processor 1220 determines a similarity between the target image and the first data.

The processor 1220 may determine the characteristics of the target image and detect a defect of a new type by using the determined characteristics. According to an embodiment, the processor 1220 may determine a target image as the second data when the target image does not correspond to the first data. According to another embodiment, the processor 1220 may determine a target image as the second data when the similarity between the target image and the first data does is less than the preset reference value. According to an embodiment disclosed herein, the target subject product corresponding to the target image determined as the second data may correspond to a defective product of a new type. The processor 1220 may detect the defective product of the new type by detecting the target subject product corresponding to the target image.

According to an embodiment, the processor 1220 may include the second data in the learning data. The processor 1220 may learn a defect of a new type by including the second data in the learning data. The new defect detection device 1200 may share the second data with the inspection device 1100. According to an embodiment, the inspection device 1100 may learn the second data, thereby improving the precision of defect detection.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

The above description is merely illustrative of the technical idea of the present disclosure, and various modifications and variations will be possible without departing from the essential characteristics of embodiments of the present disclosure by those of ordinary skill in the art to which the embodiments disclosed herein pertains. The invention is defined by the appended claims.

## Claims

1. A battery defect detection apparatus (101) comprising:
a) a communication module (120);
b) a processor (120, 150, 1120, 1220); and
c) a memory (140) configured to store a first artificial intelligence model, a second artificial intelligence model, and instructions,
d) wherein the instructions cause, when executed by the processor (120, 150, 1120, 1220), the battery defect detection apparatus (101), to:
d1) obtain an image (201, 205, 311, 312, 351, 352, 501, 610, 650) of a subject product by using the communication module (120);
d2) input the image (201, 205, 311, 312, 351, 352, 501, 610, 650) of the subject product to the first artificial intelligence model to classify the subject product; and
d3) input the image (201, 205, 311, 312, 351, 352, 501, 610, 650) of the subject product to the second artificial intelligence model to determine whether the image (201, 205, 311, 312, 351, 352, 501, 610, 650) of the subject product corresponds to first data (310) for classifying the subject product as normal among learning data of the first artificial intelligence model, when the subject product is classified as normal, wherein the learning data includes at least one of each of data for classifying the subject product as normal and data for classifying the subject product as defective;
d4) obtain a similarity between the image (201, 205, 311, 312, 351, 352, 501, 610, 650) and the first data (310) through the second artificial intelligence model; and
d5) re-classify the subject product as defective or normal based on the similarity.

2. The battery defect detection apparatus (101) of claim 1, wherein the instructions cause, when executed by the processor (120, 150, 1120, 1220), the battery defect detection apparatus (101), to re-classify the subject product as defective when the image (201, 205, 311, 312, 351, 352, 501, 610, 650) does not correspond to the first data (310).

3. The battery defect detection apparatus (101) of claim 1, wherein the instructions cause, when executed by the processor (120, 150, 1120, 1220), the battery defect detection apparatus (101), to determine the image (201, 205, 311, 312, 351, 352, 501, 610, 650) as second data (350) for classifying the subject product as defective, when the image (201, 205, 311, 312, 351, 352, 501, 610, 650) does not correspond to the first data (310).

4. The battery defect detection apparatus (101) of claim 3, wherein the instructions cause, when executed by the processor (120, 150, 1120, 1220), the battery defect detection apparatus (101), to train the first artificial intelligence model based on the second data (350).

5. The battery defect detection apparatus (101) of claim 1, wherein the instructions cause, when executed by the processor (120, 150, 1120, 1220), the battery defect detection apparatus (101), to determine the image (201, 205, 311, 312, 351, 352, 501, 610, 650) as second data (350) for classifying the subject product as defective, when the similarity of the image (201, 205, 311, 312, 351, 352, 501, 610, 650) is less than a preset reference value.

6. The battery defect detection apparatus (101) of claim 5, wherein the instructions cause, when executed by the processor (120, 150, 1120, 1220), the battery defect detection apparatus (101), to train the first artificial intelligence model based on the second data (350).

7. A battery defect detection computer-implemented method comprising
obtaining (S100) an image (201, 205, 311, 312, 351, 352, 501, 610, 650) of a subject product;
inputting (S110) the image (201, 205, 311, 312, 351, 352, 501, 610, 650) of the subject product to the first artificial intelligence model to classify the subject product; and
inputting the image (201, 205, 311, 312, 351, 352, 501, 610, 650) of the subject product to the second artificial intelligence model to determine whether the image (201, 205, 311, 312, 351, 352, 501, 610, 650) of the subject product corresponds to first data (310) for classifying the subject product as normal among learning data of the first artificial intelligence model, when the subject product is classified as normal, wherein the learning data includes at least one of each of data for classifying the subject product as normal and data for classifying the subject product as defective;
obtaining (S300, S400) a similarity between the image (201, 205, 311, 312, 351, 352, 501, 610, 650) and the first data through the second artificial intelligence model; and
re-classifying (S210, S310, S420) the subject product as defective or normal based on the similarity.

8. The battery defect detection method of claim 7, further comprising re-classifying the subject product as defective when the image (201, 205, 311, 312, 351, 352, 501, 610, 650) does not correspond to the first data (310).

9. The battery defect detection method of claim 7, further comprising determining the image (201, 205, 311, 312, 351, 352, 501, 610, 650) as second data (350) for classifying the subject product as defective, when the image (201, 205, 311, 312, 351, 352, 501, 610, 650) does not correspond to the first data (310).

10. The battery defect detection method of claim 9, further comprising training the first artificial intelligence model based on the second data (350).

11. The battery defect detection method of claim 7, further comprising determining the image (201, 205, 311, 312, 351, 352, 501, 610, 650) as second data (350) for classifying the subject product as defective, when the similarity of the image (201, 205, 311, 312, 351, 352, 501, 610, 650) is less than a preset reference value.

12. The battery defect detection method of claim 11, further comprising training the first artificial intelligence model based on the second data (350).

13. A battery defect detection system comprising:
a battery defect detection apparatus (101) configured to obtain an image (201, 205, 311, 312, 351, 352, 501, 610, 650) of a subject product and classify the subject product by using a first artificial intelligence model trained using the image (201, 205, 311, 312, 351, 352, 501, 610, 650) of the subject product and previously stored learning data; and
a new defect detection device (1100, 1200) configured to input the image (201, 205, 311, 312, 351, 352, 501, 610, 650) of the subject product to a second artificial intelligence model to determine whether the image (201, 205, 311, 312, 351, 352, 501, 610, 650) of the subject product corresponds to first data (310) for classifying the subject product as normal among the learning data of the first artificial intelligence model, when the subject product is classified as normal, wherein the learning data includes at least one of each of data for classifying the subject product as normal and data for classifying the subject product as defective, obtain a similarity between the image (201, 205, 311, 312, 351, 352, 501, 610, 650) and the first data (310) through the second artificial intelligence model, and re-classifying the subject product as defective or normal based on the similarity.

## Patentansprüche

1. Batteriedefektdetektionsvorrichtung (101), umfassend:
a) ein Kommunikationsmodul (120);
b) einen Prozessor (120, 150, 1120, 1220); und
c) einen Speicher (140), der konfiguriert ist, um ein erstes Modell künstlicher Intelligenz, ein zweites Modell künstlicher Intelligenz und Anweisungen zu speichern,
d) wobei die Anweisungen, wenn sie durch den Prozessor (120, 150, 1120, 1220) ausgeführt werden, die Batteriedefektdetektionsvorrichtung (101) veranlassen zum:
d1) Erhalten eines Bilds (201, 205, 311, 312, 351, 352, 501, 610, 650) eines betreffenden Produkts unter Verwendung des Kommunikationsmoduls (120);
d2) Eingeben des Bilds (201, 205, 311, 312, 351, 352, 501, 610, 650) des betreffenden Produkts in das erste Modell künstlicher Intelligenz, um das betreffende Produkt zu klassifizieren; und
d3) Eingeben des Bilds (201, 205, 311, 312, 351, 352, 501, 610, 650) des betreffenden Produkts in das zweite Modell künstlicher Intelligenz, um zu bestimmen, ob das Bild (201, 205, 311, 312, 351, 352, 501, 610, 650) des betreffenden Produkts ersten Daten (310) zum Klassifizieren des betreffenden Produkts als normal unter Lerndaten des ersten Modells künstlicher Intelligenz entspricht, wenn das betreffende Produkt als normal klassifiziert wird, wobei die Lerndaten Daten zum Klassifizieren des betreffenden Produkts als normal und/oder Daten zum Klassifizieren des betreffenden Produkts als defekt beinhalten;
d4) Erhalten einer Ähnlichkeit zwischen dem Bild (201, 205, 311, 312, 351, 352, 501, 610, 650) und den ersten Daten (310) durch das zweite Modell künstlicher Intelligenz; und
d5) Neuklassifizieren des betreffenden Produkts als defekt oder normal basierend auf der Ähnlichkeit.

2. Batteriedefektdetektionsvorrichtung (101) nach Anspruch 1, wobei die Anweisungen, wenn sie durch den Prozessor (120, 150, 1120, 1220) ausgeführt werden, die Batteriedefektdetektionsvorrichtung (101) veranlassen, das betreffende Produkt als defekt neu zu klassifizieren, wenn das Bild (201, 205, 311, 312, 351, 352, 501, 610, 650) nicht den ersten Daten (310) entspricht.

3. Batteriedefektdetektionsvorrichtung (101) nach Anspruch 1, wobei die Anweisungen, wenn sie durch den Prozessor (120, 150, 1120, 1220) ausgeführt werden, die Batteriedefektdetektionsvorrichtung (101) veranlassen, das Bild (201, 205, 311, 312, 351, 352, 501, 610, 650) als zweite Daten (350) zum Klassifizieren des betreffenden Produkts als defekt zu bestimmen, wenn das Bild (201, 205, 311, 312, 351, 352, 501, 610, 650) nicht den ersten Daten (310) entspricht.

4. Batteriedefektdetektionsvorrichtung (101) nach Anspruch 3, wobei die Anweisungen, wenn sie durch den Prozessor (120, 150, 1120, 1220) ausgeführt werden, die Batteriedefektdetektionsvorrichtung (101) veranlassen, das erste Modell künstlicher Intelligenz basierend auf den zweiten Daten (350) zu trainieren.

5. Batteriedefektdetektionsvorrichtung (101) nach Anspruch 1, wobei die Anweisungen, wenn sie durch den Prozessor (120, 150, 1120, 1220) ausgeführt werden, die Batteriedefektdetektionsvorrichtung (101) veranlassen, das Bild (201, 205, 311, 312, 351, 352, 501, 610, 650) als zweite Daten (350) zum Klassifizieren des betreffenden Produkts als defekt zu bestimmen, wenn die Ähnlichkeit des Bilds (201, 205, 311, 312, 351, 352, 501, 610, 650) kleiner als ein voreingestellter Referenzwert ist.

6. Batteriedefektdetektionsvorrichtung (101) nach Anspruch 5, wobei die Anweisungen, wenn sie durch den Prozessor (120, 150, 1120, 1220) ausgeführt werden, die Batteriedefektdetektionsvorrichtung (101) veranlassen, das erste Modell künstlicher Intelligenz basierend auf den zweiten Daten (350) zu trainieren.

7. Computerimplementiertes Batteriedefektdetektionsverfahren, umfassend:
Erhalten (S100) eines Bilds (201, 205, 311, 312, 351, 352, 501, 610, 650) eines betreffenden Produkts;
Eingeben (S110) des Bilds (201, 205, 311, 312, 351, 352, 501, 610, 650) des betreffenden Produkts in das erste Modell künstlicher Intelligenz, um das betreffende Produkt zu klassifizieren; und
Eingeben des Bilds (201, 205, 311, 312, 351, 352, 501, 610, 650) des betreffenden Produkts in das zweite Modell künstlicher Intelligenz, um zu bestimmen, ob das Bild (201, 205, 311, 312, 351, 352, 501, 610, 650) des betreffenden Produkts ersten Daten (310) zum Klassifizieren des betreffenden Produkts als normal unter Lerndaten des ersten Modells künstlicher Intelligenz entspricht, wenn das betreffende Produkt als normal klassifiziert wird, wobei die Lerndaten Daten zum Klassifizieren des betreffenden Produkts als normal und/oder Daten zum Klassifizieren des betreffenden Produkts als defekt beinhalten;
Erhalten (S300, S400) einer Ähnlichkeit zwischen dem Bild (201, 205, 311, 312, 351, 352, 501, 610, 650) und den ersten Daten durch das zweite Modell künstlicher Intelligenz; und
Neuklassifizieren (S210, S310, S420) des betreffenden Produkts als defekt oder normal basierend auf der Ähnlichkeit.

8. Batteriedefektdetektionsverfahren nach Anspruch 7, ferner umfassend ein Neuklassifizieren des betreffenden Produkts als defekt, wenn das Bild (201, 205, 311, 312, 351, 352, 501, 610, 650) nicht den ersten Daten (310) entspricht.

9. Batteriedefektdetektionsverfahren nach Anspruch 7, ferner umfassend ein Bestimmen des Bilds (201, 205, 311, 312, 351, 352, 501, 610, 650) als zweite Daten (350) zum Klassifizieren des betreffenden Produkts als defekt, wenn das Bild (201, 205, 311, 312, 351, 352, 501, 610, 650) nicht den ersten Daten (310) entspricht.

10. Batteriedefektdetektionsverfahren nach Anspruch 9, ferner umfassend ein Trainieren des ersten Modells künstlicher Intelligenz basierend auf den zweiten Daten (350).

11. Batteriedefektdetektionsverfahren nach Anspruch 7, ferner umfassend ein Bestimmen des Bilds (201, 205, 311, 312, 351, 352, 501, 610, 650) als zweite Daten (350) zum Klassifizieren des betreffenden Produkts als defekt, wenn die Ähnlichkeit des Bilds (201, 205, 311, 312, 351, 352, 501, 610, 650) kleiner als ein voreingestellter Referenzwert ist.

12. Batteriedefektdetektionsverfahren nach Anspruch 11, ferner umfassend ein Trainieren des ersten Modells künstlicher Intelligenz basierend auf den zweiten Daten (350).

13. Batteriedefektdetektionssystem, umfassend:
eine Batteriedefektdetektionsvorrichtung (101), die konfiguriert ist, um ein Bild (201, 205, 311, 312, 351, 352, 501, 610, 650) eines betreffenden Produkts zu erhalten und das betreffende Produkt unter Verwendung eines ersten Modells künstlicher Intelligenz, das unter Verwendung des Bilds (201, 205, 311, 312, 351, 352, 501, 610, 650) des betreffenden Produkts und zuvor gespeicherter Lerndaten trainiert wurde, zu klassifizieren; und
eine Neudefektdetektionsvorrichtung (1100, 1200), die konfiguriert ist, um das Bild (201, 205, 311, 312, 351, 352, 501, 610, 650) des betreffenden Produkts in ein zweites Modell künstlicher Intelligenz einzugeben, um zu bestimmen, ob das Bild (201, 205, 311, 312, 351, 352, 501, 610, 650) des betreffenden Produkts ersten Daten (310) zum Klassifizieren des betreffenden Produkts als normal unter den Lerndaten des ersten Modells künstlicher Intelligenz entspricht, wenn das betreffende Produkt als normal klassifiziert wird, wobei die Lerndaten Daten zum Klassifizieren des betreffenden Produkts als normal und/oder Daten zum Klassifizieren des betreffenden Produkts als defekt beinhalten, eine Ähnlichkeit zwischen dem Bild (201, 205, 311, 312, 351, 352, 501, 610, 650) und den ersten Daten (310) durch das zweite Modell künstlicher Intelligenz zu erhalten und das betreffende Produkt basierend auf der Ähnlichkeit als defekt oder normal neu zu klassifizieren.

## Revendications

1. Dispositif de détection de défaut de batterie (101), comprenant :
a) un module de communication (120) ;
b) un processeur (120, 150, 1120, 1220) ; et
c) une mémoire (140) configurée pour stocker un premier modèle d'intelligence artificielle, un deuxième modèle d'intelligence artificielle et des instructions,
d) où, lorsqu'elles sont exécutées par le processeur (120, 150, 1120, 1220), les instructions entraînent le dispositif de détection de défaut de batterie (101), à :
d1) obtenir une image (201, 205, 311, 312, 351, 352, 501, 610, 650) d'un produit ciblé au moyen du module de communication (120) ;
d2) entrer l'image (201, 205, 311, 312, 351, 352, 501, 610, 650) du produit ciblé dans le premier modèle d'intelligence artificielle pour catégoriser le produit ciblé ; et
d3) entrer l'image (201, 205, 311, 312, 351, 352, 501, 610, 650) du produit ciblé dans le deuxième modèle d'intelligence artificielle pour déterminer si l'image (201, 205, 311, 312, 351, 352, 501, 610, 650) du produit ciblé correspond à des premières données (310) afin de catégoriser le produit ciblé comme normal parmi les données d'apprentissage du premier modèle d'intelligence artificielle, si le produit ciblé est catégorisé comme normal, les données d'apprentissage comprenant des données pour catégoriser le produit ciblé comme normal et/ou des données pour catégoriser le produit ciblé comme défectueux ;
d4) obtenir une similarité entre l'image (201, 205, 311, 312, 351, 352, 501, 610, 650) et les premières données (310) au moyen du deuxième modèle d'intelligence artificielle ; et
d5) recatégoriser le produit ciblé comme défectueux ou normal sur la base de la similarité.

2. Dispositif de détection de défaut de batterie (101) selon la revendication 1, où, lorsqu'elles sont exécutées par le processeur (120, 150, 1120, 1220), les instructions entraînent le dispositif de détection de défaut de batterie (101) à recatégoriser le produit ciblé comme défectueux si l'image (201, 205, 311, 312, 351, 352, 501, 610, 650) ne correspond pas aux premières données (310).

3. Dispositif de détection de défaut de batterie (101) selon la revendication 1, où, lorsqu'elles sont exécutées par le processeur (120, 150, 1120, 1220), les instructions entraînent le dispositif de détection de défaut de batterie (101) à déterminer l'image (201, 205, 311, 312, 351, 352, 501, 610, 650) en tant que deuxièmes données (350) pour catégoriser le produit ciblé comme défectueux, si l'image (201, 205, 311, 312, 351, 352, 501, 610, 650) ne correspond pas aux premières données (310).

4. Dispositif de détection de défaut de batterie (101) selon la revendication 3, où, lorsqu'elles sont exécutées par le processeur (120, 150, 1120, 1220), les instructions entraînent le dispositif de détection de défaut de batterie (101) à entraîner le premier modèle d'intelligence artificielle sur la base des deuxièmes données (350).

5. Dispositif de détection de défaut de batterie (101) selon la revendication 1, où, lorsqu'elles sont exécutées par le processeur (120, 150, 1120, 1220), les instructions entraînent le dispositif de détection de défaut de batterie (101) à déterminer l'image (201, 205, 311, 312, 351, 352, 501, 610, 650) en tant que deuxièmes données (350) pour catégoriser le produit ciblé comme défectueux, si la similarité de l'image (201, 205, 311, 312, 351, 352, 501, 610, 650) est inférieure à une valeur de référence prédéfinie.

6. Dispositif de détection de défaut de batterie (101) selon la revendication 5, où, lorsqu'elles sont exécutées par le processeur (120, 150, 1120, 1220), les instructions entraînent le dispositif de détection de défaut de batterie (101) à entraîner le premier modèle d'intelligence artificielle sur la base des deuxièmes données (350).

7. Procédé de détection de défaut de batterie mis en œuvre par ordinateur, comprenant :
l'obtention (S100) d'une image (201, 205, 311, 312, 351, 352, 501, 610, 650) d'un produit ciblé ;
l'entrée (S110) de l'image (201, 205, 311, 312, 351, 352, 501, 610, 650) du produit ciblé dans le premier modèle d'intelligence artificielle pour catégoriser le produit ciblé ; et
l'entrée de l'image (201, 205, 311, 312, 351, 352, 501, 610, 650) du produit ciblé dans le deuxième modèle d'intelligence artificielle pour déterminer si l'image (201, 205, 311, 312, 351, 352, 501, 610, 650) du produit ciblé correspond à des premières données (310) afin de catégoriser le produit ciblé comme normal parmi les données d'apprentissage du premier modèle d'intelligence artificielle, si le produit ciblé est catégorisé comme normal, les données d'apprentissage comprenant des données pour catégoriser le produit ciblé comme normal et/ou des données pour catégoriser le produit ciblé comme défectueux ;
l'obtention (S300, S400) d'une similarité entre l'image (201, 205, 311, 312, 351, 352, 501, 610, 650) et les premières données au moyen du deuxième modèle d'intelligence artificielle ; et
la recatégorisation (S210, S310, S420) du produit ciblé comme défectueux ou normal sur la base de la similarité.

8. Procédé de détection de défaut de batterie selon la revendication 7, comprenant en outre la recatégorisation du produit ciblé comme défectueux si l'image (201, 205, 311, 312, 351, 352, 501, 610, 650) ne correspond pas aux premières données (310).

9. Procédé de détection de défaut de batterie selon la revendication 7, comprenant en outre la détermination de l'image (201, 205, 311, 312, 351, 352, 501, 610, 650) en tant que deuxièmes données (350) pour catégoriser le produit ciblé comme défectueux, si l'image (201, 205, 311, 312, 351, 352, 501, 610, 650) ne correspond pas aux premières données (310).

10. Procédé de détection de défaut de batterie de la revendication 9, comprenant en outre l'entraînement du premier modèle d'intelligence artificielle sur la base des deuxièmes données (350).

11. Procédé de détection de défaut de batterie selon la revendication 7, comprenant en outre la détermination de l'image (201, 205, 311, 312, 351, 352, 501, 610, 650) en tant que deuxièmes données (350) pour catégoriser le produit ciblé comme défectueux, si la similarité de l'image (201, 205, 311, 312, 351, 352, 501, 610, 650) est inférieure à une valeur de référence prédéfinie.

12. Procédé de détection de défaut de batterie selon la revendication 11, comprenant en outre l'entraînement du premier modèle d'intelligence artificielle sur la base des deuxièmes données (350).

13. Système de détection de défaut de batterie, comprenant :
un appareil de détection de défaut de batterie (101) configuré pour obtenir une image (201, 205, 311, 312, 351, 352, 501, 610, 650) d'un produit ciblé et catégoriser le produit ciblé au moyen d'un premier modèle d'intelligence artificielle entraîné au moyen de l'image (201, 205, 311, 312, 351, 352, 501, 610, 650) du produit ciblé et de données d'apprentissage précédemment stockées ; et
un nouveau dispositif de détection de défaut (1100, 1200) configuré pour entrer l'image (201, 205, 311, 312, 351, 352, 501, 610, 650) du produit ciblé dans un deuxième modèle d'intelligence artificielle afin de déterminer si l'image (201, 205, 311, 312, 351, 352, 501, 610, 650) du produit ciblé correspond à des premières données (310) pour catégoriser le produit ciblé comme normal parmi les données d'apprentissage du premier modèle d'intelligence artificielle, si le produit ciblé est catégorisé comme normal, les données d'apprentissage comprenant des données pour catégoriser le produit ciblé comme normal et/ou des données pour catégoriser le produit ciblé comme défectueux, obtenir une similarité entre l'image (201, 205, 311, 312, 351, 352, 501, 610, 650) et les premières données (310) au moyen du deuxième modèle d'intelligence artificielle, et recatégoriser le produit ciblé comme défectueux ou normal sur la base de la similarité.
